## Europäisches Patentamt

## European Patent Office

## Office européen des brevets

(11) Publication number: **0 109 391**
**B1**

(12) **EUROPEAN PATENT SPECIFICATION**

(45) Date of publication of patent specification: **23.04.86**

(51) Int. Cl.⁴: **B 01 D 47/16, B 01 D 50/00**

(21) Application number: **82900123.9**

(22) Date of filing: **24.12.81**

(86) International application number:
**PCT/GB81/00287**

(87) International publication number:
**WO 82/03341 14.10.82 Gazette 82/25**

(54) **GAS SCRUBBER.**

(43) Date of publication of application:
**30.05.84 Bulletin 84/22**

(45) Publication of the grant of the patent:
**23.04.86 Bulletin 86/17**

(84) Designated Contracting States:
**GB**

(56) References cited:
**CA-A- 907 544**
**GB-A-1 048 921**

(73) Proprietor: **DENKEN (MECHANICAL SERVICES) LIMITED**
**North Lodge Works Jubilee Street**
**Melton Mowbray Leicestershire LE13 1XA (GB)**

(72) Inventor: **NOTT, Dennis Lawson**
**10 Meadow Way**
**Melton Mowbray, Leicestershire (GB)**

(74) Representative: **Marshall, John Grahame**
**SERJEANTS 25 The Crescent King Street**
**Leicester LE1 6RX (GB)**

Courier Press, Leamington Spa, England.

## Description

This invention relates to gas scrubbers for removing particulate and vapour contamination from air and gases.

Gas scrubbers are known, and involve the creation of a fine mist spray to wet any particulate matter entrained in the air or to dissolve any vapour contaminants, followed by the removal of the heavier wet particles and the spray generally from the air. Gas scrubbers therefore comprise two distinct zones, namely a spray-inducing zone and a spray separation zone.

Spray induction has in the past been achieved by means of high pressure spray jets, by means of revolving flat or undulating discs to which a film of water is applied, or by creating excessive turbulence in the air over the surface of some water, to provide a so-called self-induced spray. The use of high pressure jets is commercially disadvantageous because of their tendency to block with dirt, so that such spray inducers require a constant supply of clean fresh water rather than recycled waste water. The use of a self-induced spray is more reliable in that it uses no high pressure jets and can use recycled water, but the fineness of the spray so produced is rather limited.

Spray elimination has in the past been based on the general concept that if the moist air is passed along a tortuous path, each change of direction of the air will result in some of the water droplets or moist particles entrained therein being carried by their greater inertia on a straight line path into contact with a wall or baffle on which they condense or coalesce. It is common therefore for spray eliminators to comprise a number of zig-zag baffles together defining a non-linear or tortuous path for the moist air. Such a spray eliminator or mist separator is disclosed for example in the gas scrubber of Swedish Patent Specification No. 210236. Its efficiency is however limited, as is indicated by the high moisture content of the gas issuing from such a scrubber.

The invention provides a gas scrubber comprising means (14) for drawing air successively through a spray passage and a spray separation chamber of larger cross-section than the spray passage, wherein spray-inducing means in the spray passage (3) comprise an axial array of axial flow impellers (10, 11, 12) on a common drive shaft (9) each for assisting the flow of air through the spray passage in a first direction towards the spray separation chamber (4) and means for supplying water to the blades of the impellers to create a fine mist spray in the spray passage, spray-separating means in the spray separation chamber comprising a further axial flow impeller or impellers (13), in axial alignment with the impellers of the spray-inducing means, for inducing air flow in a direction opposite to the first direction and deflecting the spray and air issuing from the spray passage outwardly against side walls of the spray separation chamber.

It is perhaps surprising that the invention, in utilizing very similar components for spray generation and spray elimination, achieves a highly efficient gas scrubber. However extremely high efficiencies can be achieved according to the invention, both in the removal of contamination from the air and in the removal of spray and moisture from the air in the spray separation chamber. In addition, a number of other significant advantages are obtained as discussed in detail below.

Dealing first with the operation of the spray-inducing means in the spray passage, it will be appreciated that the spray-inducing means provided according to the invention affords advantages over the spray nozzles, rotating discs and self-induction methods of the prior art. Water can readily be supplied to the impeller blades at a location immediately upstream of the impeller blades. One method is to supply the water axially upwardly through a centre bore in the drive shaft for the impeller blades, to spill out into an annular trough immediately upstream of the respective blade. Rotation of the trough results in the water being flung out as a continuous coherent film which is immediately drawn upwardly by the air flow into the impeller blade path where it is broken into very fine droplets. A further very marked increase in the efficiency of this mist creation is possible by having successive impellers on the drive shaft with different blade pitches, so that there is a constant pressure variation and resulting turbulence on air passing through the spray passage. Tests have shown that where there are three or more impellers on the drive shaft, a particularly fine mist spray can be achieved by varying the pitch of the impeller blades on the different impellers so that the first impeller accelerates the air flow, the second decelerates it and the third accelerates it again preferably to a flow rate in excess of that induced at the first impeller. Not only is the mist issuing from such a spray passage fine and uniform, but also it is found that any particles of solid or liquid or any fumes contaminating the incoming gas are wetted to an extent not previously possible in a single pass through such a simple and reliable spray-inducing means.

The consequence of the above wetting of the gas contaminants is that the effective particle size and mass of each particle or droplet of contaminant is increased. Use is made of this increased mass in the spray elimination zone which constitutes the second element of the gas scrubber of the invention.

As the gas issues from the spray passage, it passes into the spray separation chamber which has a larger cross-sectional area than the spray passage. This slows down the gas flow to a rate at which the removal of the spray is optimized. Preferably the impeller or impellers of the spray-separating means is or are set to induce an air flow that is substantially equal to but the reverse of that induced by the nearest impeller of the spray-inducing means. This is effective to deflect the gas particles through more than 90°, back generally towards but to the side of the spray passage. Droplets and moist particles in the gas stream, however, have a greater inertia and are not as readily deflected. They therefore impinge on the blades of the further impeller, to be flung radially outwardly against the side walls of the spray separation chamber where they coalesce into a film of dirty water running down the side walls back into the reservoir.

No other spray elimination device is needed in the gas scrubber of the invention, although suitable shaping of the side walls of the spray separation chamber, and optionally the provision of baffles in the spray separation chamber extending generally radially towards the axis of the further impeller, does help to encourage turbulence in the spray separation chamber and reduce the cyclic movement of air around that chamber as induced by the further impeller.

It is surprising that a gas scrubber so inherently simple in design should have an efficiency in excess of far more complicated devices, but it has been found that a gas scrubber according to the invention having only three impellers in the spray passage and only one further impeller in the spray separation chamber is 98% efficient in removing contaminants from air down to a particle size of 0.5 micrometres. Different contaminants that can be removed in this way include dust particles, oil mists, solvents such as paint fumes, and welding fumes. This is quite a startling efficiency, and is accompanied by a number of other advantages including economy of manufacture, compact size, economy of running, a low humidity gain in the scrubbed air and therefore a low heat loss in the air as it passes through the scrubber, the ability to cope with a large range of particle sizes, the ability to recycle the water used for scrubbing, and the avoidance of high pressure jets which are prone to blockage.

In the accompanying drawings:

Figure 1 is a schematic vertical section through a gas scrubber according to the invention;

Figure 2 is a schematic horizontal section through the spray separation chamber; and

Figure 3 is an enlarged section through one of the impellers in the spray passage.

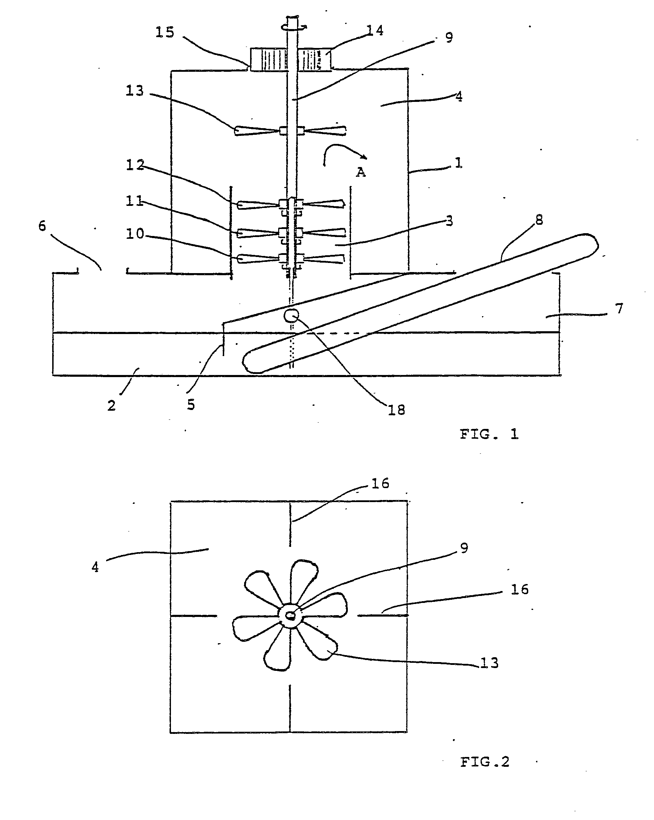

Referring first to Figure 1, the gas scrubber comprises a housing 1 defining a water reservoir 2, a spray passage 3 and a spray separation chamber 4. The reservoir 2 is divided into two compartments by an inverted weir 5, so that contaminated air can pass from an inlet 6 to the spray passage 3 over the surface of water in the reservoir while maintaining isolation from a sludge disposal chamber 7 on the other side of the inverted weir 5. Sludge disposal from the chamber 7 can be by any suitable means such as a belt conveyor 8.

The spray passage 3 is cylindrical in shape, with a vertical axis which forms the axis of a drive shaft 9 described in greater detail below. On the drive shaft 9 are mounted three axial flow impellers 10, 11 and 12 in the spray passage 3; one further axial flow impeller 13 in the spray separation chamber 4; and a radial flow paddle-bladed exhaust fan 14 in an exit port 15 leading from the chamber 4. Means are provided, as described below, for supplying water to the impellers 10 to 12 so as to create in the spray passage a dense and fine mist spray of rapidly moving water droplets which impinge upon and throughly wet the contaminants in the air that is being supplied to the inlet 6. Rotation of the impellers 10 to 12 causes the spray to be thrown radially outwardly against the wall of the spray passage 3, where some of the spray coalesces and runs down the wall back into the reservoir 2. However setting of the impeller blades at different pitches, so that the blades of impeller 11 are of a lesser pitch than those of impellers 10 and 12, and so that the blades of impeller 10 are of a lesser pitch than those of impeller 12, greatly assists the creation and maintenance of the fine mist spray by establishing a continuous variation in pressure along the spray passage 3, and maximizing the turbulence of the air passing through that passage. Advantageously the impeller blades of the impellers 10 to 12, and optionally also of impeller 13, are of an adjustable nature so that their blade angles can be varied to suit the particular particle size and nature of the contaminants in the air to be scrubbed. The flow of water over the impeller blades and down the wall of the spray passage 3 is sufficient to maintain a constant cleaning or washing of the blades and wall in use, so that no problems of silting-up are encountered.

Advantageously the blades of the three impellers 10, 11 and 12 are angularly offset one from the other so that each blade of impeller 10 overlies a space between adjacent blades of impeller 11, and so on down the row of impellers. In this way large articles such as cigarette cartons thrown into the air intake tend to pass through the spray passage 3 rather than jamming and blocking it.

The impeller 13 has its blades set on the opposite hand to those of the impellers 10 to 12, so that it tends to induce an air flow axially downwardly towards the spray passage 3. The difference in cross-sectional areas of the spray passage 3 and the spray separation chamber 4 is in itself sufficient to slow down the air flow considerably, preferably to a linear flow rate of less than 800 feet per minute (about 400 cm per second). The additional effect of the counter-flow induced by the impeller 13 is that the air is deflected in the general direction of the arrow A, whereas water droplets or saturated contaminant particles entrained in the air flow strike the impeller blades and are thrown radially outwardly against the side walls of the chamber 4. There they coalesce into a film of water and contaminant particles to flow down the walls and back into the reservoir 2. As with the spray passage 3, the action is self-cleaning in that the impeller 13 and the walls of the chamber 4 are constantly washed in use.

Figure 2 shows the spray separation chamber 4 in horizontal section, to illustrate how radial baffles 16 are provided to reduce the tendency of air to swirl in a vortex around the axis of the drive shaft 9, and to promote increased turbulence in the chamber 4. The air turbulence in the chamber 4 is also increased by making this chamber of square section rather than circular section.

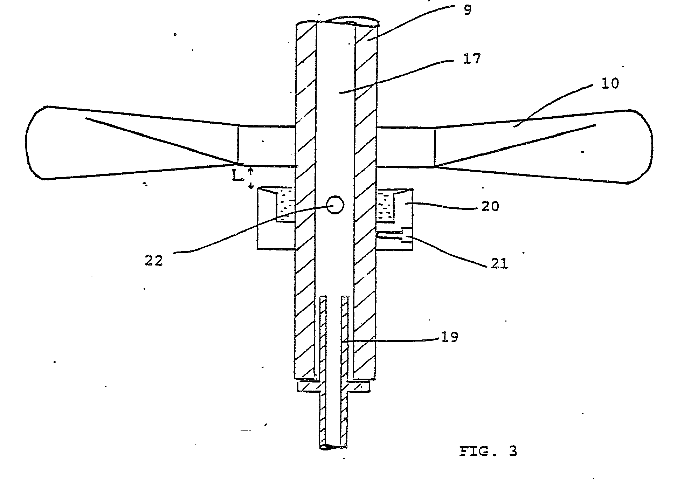

Figure 3 illustrates the means for supplying water to the impellers 10 to 12 in the spray passage 3. The drive shaft 9 is hollow, with a water supply passage 17 up its centre. Water is pumped from the reservoir 2 by a low-pressure pump (indicated generally as 18 in Figure 1 but not shown in Figure 3) which is capable of supplying a head of perhaps half a metre of water. The water so supplied is passed upwardly through a supply pipe 19 axially of the drive shaft 9, there being a clearance between the supply pipe 19 and the water supply passage 17. The pump capacity should be sufficient to ensure that the resulting water loss is adequately compensated, and the water flowing down the outside of the supply pipe does have the advantage that it lubricates the junction between the rotary shaft 9 and the stationary supply passage 19.

Beneath each of the impellers 10 to 12 (only 10 being shown in Figure 3) is an annular trough 20 clamped to the outside of the shaft 9 by grub-screws 21. Water passes from the supply passage 17 through radial bores 22 and fills to overflowing the annular space formed between the shaft 9 and the trough 20. Rotation of the shaft 9 causes the water spilling from the trough to be thrown outwardly as a thin and coherent film of water which is immediately drawn upwardly into the impeller blades by the air stream.

The spacing L between the trough 20 and the impeller 10 (or 11 or 12) is not critical, and in practice it has been found that spacings of up to 1 cm are very effective to ensure that the water film is supplied directly into the blades of the impeller.

The gas scrubber described above has operated at very low power consumptions with an efficiency of 98% on particle sizes down to 0.5 micrometres. Tests on the scrubbed gas show a very low moisture uptake, this being reflected in the relatively small cooling effect which the unit has on gas passing through it. It is believed that the efficiency could further be improved by increasing the number of impellers in the spray passage 3 and/or by augmenting the further impeller 13 with other auxiliary impellers in the spray separation chamber.

**Claims**

1. A gas scrubber comprising means (14) for drawing air successively through a spray passage and a spray-separation chamber of larger cross-section than the spray passage, wherein spray-inducing means in the spray passage (3) comprise an axial array of axial flow impellers (10, 11, 12) on a common drive shaft (9) each for assisting the flow of air through the spray passage in a first direction towards the spray separation chamber (4) and means for supplying water to the blades of the impellers to create a fine mist spray in the spray passage, spray-separating means in the spray separation chamber comprising a further axial flow impeller or impellers (13), in axial alignment with the impellers of the spray-inducing means, for inducing air flow in a direction opposite to the first direction and deflecting the spray issuing from the spray passage outwardly against side walls of the spray separation chamber.

2. A gas scrubber according to claim 1, wherein the successive impellers (10, 11, 12) of the spray-inducing means have mutually different blade pitches, to promote turbulence and pressure variation in the spray passage (3) and to encourage the creation of a fine mist spray.

3. A gas scrubber according to claim 2, wherein the impellers (10, 11, 12) of the spray-inducing means are at least three in number and a first (10) is set to accelerate the air flow through the spray passage, the second (11) is set to decelerate the air flow and the third (12) is set to accelerate the air flow to a rate in excess of that induced by the first impeller.

4. A gas scrubber according to any one of claims 1 to 3, wherein the impeller or impellers (13) of the spray-separating means are mounted on and driven by the drive shaft (9) for the impellers (10, 11, 12) of the spray-inducing means.

5. A gas scrubber according to any one of claims 1 to 4, wherein the impeller or impellers (13) of the spray-separating means is or are set to induce an air flow that is substantially equal to but the reverse of that induced by the nearest impeller (12) of the spray-inducing means.

6. A gas scrubber according to any of claims 1 to 5, wherein the side walls of the spray separation chamber are shaped to encourage air turbulence within the spray separation chamber (4).

7. A gas scrubber according to claim 6, wherein baffles (16) are provided on the side walls of the spray separation chamber (4) extending generally radially towards the axis of the further impeller to resist the cyclic movement of air around that chamber.

8. A gas scrubber according to any preceding claim, wherein the means for supplying water to the blades of the impellers (10, 11, 12) of the spray-inducing means comprises a conduit (17) extending axially of the drive shaft (9) and communicating with an annular trough (20) immediately upstream of each of the impellers of the spray-inducing means, and a pump (18) for supplying water from a reservoir (2) beneath the spray separation chamber via the conduit to the annular troughs.

**Revendications**

1. Un laveur de gaz comprenant un moyen (14) pour tirer de l'air successivement à travers un passage vaporisateur et une chambre de séparation vaporisatrice de diamètre plus grand que le passage vaporisateur, à l'intérieur de laquelle le moyen provoquant la vaporisation (3) comprend une rangée axiale de roues à arbres axiales (10, 11, 12) sur un arbre de transmission commun (9) chacun pour assister le flux d'air à travers le passage vaporisateur dans une première direction vers la chambre de séparation vaporisatrice (4) et un moyen d'amener l'eau aux lames des roues pour créer une fine poussière d'eau vaporisée dans le passage vaporisateur, le moyen séparant la poussière d'eau dans la chambre de séparation vaporisatrice comprenant une roue à arbre axial supplémentaire ou des roues (13), en alignement axial avec les roues à arbre des moyens provoquant la vaporisation, pour provoquer le flux d'air dans une direction opposée à la première direction et déviant la pluie fine sortant du passage vaporisateur à l'extérieur contre les parois de côté de la chambre de séparation vaporisatrice.

2. Un laveur de gaz selon la caractéristique 1, dans lequel les roues successives (10, 11, 12) du moyen provoquant la vaporisation ont mutuellement des pas de lame différents, pour provoquer une variation de turbulence et de pression dans le passage vaporisateur (3) et pour encourager la création d'une fine poussiere d'eau vaporisée.

3. Un laveur de gaz selon la caractéristique 2, dans lequel les roues (10, 11, 12) du moyen provoquant la vaporisation sont au moins au nombre de trois et une première (10) est reglée pour accélérer le flux d'air à travers le passage vaporisateur, la seconde (11) est reglée pour ralentir le flux d'air et la troisième (12) est reglée pour accélérer le flux d'air à une vitesse dépassant celle provoquée par la première roue.

4. Un laveur de gaz selon chacune des caractéristiques 1 à 3, dans lequel la roue ou roues (13) du moyen provoquant la vaporisation sont montées sur et entraînées par l'arbre de transmission (9) pour les roues (10, 11, 12) due moyen provoquant la vaporisation.

5. Un laveur de gaz selon chacune des caractéristiques 1 à 4 dans lequel la roue ou les roues (13) du moyen provoquant la vaporisation est ou sont reglées pour provoquer un flux d'air qui est substantiellement égal à tout sauf l'inverse de celui provoqué par la roue la plus proche (12) du moyen provoquant la vaporisation.

6. Un laveur de gaz selon chacune des caractéristiques 1 à 5, dans lequel les parois latérales de la chambre de séparation vaporisatrice sont formées pour encourager la turbulence de l'air à l'intérieur de la chambre de séparation vaporisatrice (4).

7. Un laveur de gaz selon la caractéristique 6, dans lequel des déflecteurs (16) sont placés sur les parois latérales de la chambre de séparation vaporisatrice (4) s'étendant généralement d'une façon radiale vers l'axe de la roue la plus eloignée pour résister au mouvement cyclique de l'air autour de cette chambre.

8. Un laveur de gaz selon toutes les caractéristiques précédentes, dans lequel le moyen de fournir l'eau aux lames des roues (10, 11, 12) du moyen provoquant la vaporisation comprend au conduit (17) s'étendant d'une façon axiale à l'arbre de transmission (9) et communiquant avec un bac annulaire (20) immédiatement devant chaque roue du moyen provoquant la vaporisation, et une pompe (18) pour amener l'eau d'un réservoir (2) en-dessous de la chambre de séparation vaporisatrice par le conduit aux bacs annulaires.

**Patentansprüche**

1. Skrubber mit Mitteln (14), mit denen die Luft nacheinander durch einen Sprühkanal und eine diesem gegenüber im Querschnitt größere Sprühnebel-Abscheidekammer gezogen wird, dadurch gekennzeichnet, daß der Sprühkanal (3) Sprühnebel-Induziermittel aufweist, die aus einer auf einer gemeinsamen Antriebswelle (9) axial angeordneten, den durch den Sprühkanal fließenden Luftstrom in einer ersten Richtung auf die Sprühnebel-Abscheidekammer zu jeweils unterstützenden Schar von Axial-Laufrädern (10, 11, 12) und den flügeln der Laufräder wasserzuführenden Mitteln zur Erzeugung eines feines Sprühnebels im Sprühkanal bestehen, und in der Sprühnebel-Abscheidekammer Sprühnebel-Abscheidemittel, bestehend aus einem mit den Laufrädern der Sprühnebel-Induziermittel fluchtenden weiteren Laufrad oder Laufrädern (13) angeordnet sind, die einen der ersten Richtung entgegengerichteten Luftstrom induzieren und den aus dem Sprühkanal austretenden Sprühnebel nach außen gegen die Seitenwände der Sprühnebel-Abscheidekammer ablenken.

2. Skrubber gemäß Anspruch 1, dadurch gekennzeichnet, daß die aufeinanderfolgenden Laufräder (10, 11, 12) der Sprühnebel-Induziermittel voneinander abweichende Blattanstellungen aufweisen, um im Sprühkanal (3) Turbulenz und Druckschwankungen zu fördern und die Entstehung eines feinen Sprühnebels zu unterstützeen.

3. Skrubber gemäß Anspruch 2, dadurch gekennzeichnet, daß als Sprühnebel-Induziermittel mindestens drei Laufräder (10, 11, 12) vorgesehen sind, wovon das erste (10) auf die Beschleunigung des Luftstromes durch den Sprühkanal, das zweite (11) auf die Verlangsamung des Luftstromes und das dritte (12) auf eine über die Beschleunigungsrate des ersten Laufrades hinausgehende Beschleunigung des Luftstromes eingestellt ist.

4. Skrubber gemäß einem der Ansprüche 1 bis 3, dadurch gekennzeichnet, daß das Laufrad bzw. die Laufräder (13) der Sprühnebel-Abscheidemittel auf die Antriebswelle (9) für die Laufräder (10, 11, 12) der Sprühnebel-Induziermittel montiert sind und auch von dieser angetrieben werden.

5. Skrubber gemäß einem der Ansprüche 1 bis 4, dadurch gekennzeichnet, daß das Laufrad bzw. die Laufräder (13) der Sprühnebel-Abscheidemittel auf die Induzierung eines Luftstromes eingestellt sind, der dem durch das nächstliegende Laufrad (12) der Sprühnebel-Induziermittel erzeugten Luftstrom im wesentlichen gleich ist, jedoch in umgekehrter Richtung strömt.

6. Skrubber gemäß einem der Ansprüche 1 bis 5, dadurch gekennzeichnet, daß die Seitenwände der Sprühnebel-Abscheidekammer so ausgebildet sind, daß dadurch die Luftturbulenz innerhalb der Abscheidekammer (4) gefördert wird.

7. Skrubber gemäß Anspruch 6, dadurch gekennzeichnet, daß an den Seitenwänden der Sprühnebel-Abscheidekammer (4) Prallbleche (16) vorgesehen sind, die sich im allgemeinen radial zur Achse des entfernten Laufrades erstrecken, um der zyklischen Bewegung der Luft in dieser Kammer entgegenzuwirken.

8. Skrubber gemäß einem der vorhergehenden Ansprüche, dadurch gekennzeichnet, daß die den Flügeln der Laufräder (10, 11, 12) der Sprühnebel-Induziermittel wasserzuführenden Mittel aus einem axial zur Antriebswelle (9) verlaufenden und mit einer direkt oberhalb jedes Laufrades der Sprühnebel-Induziermittel angeordneten Ringrinne (20) in Verbindung stehenden Leitkanal (17) sowie einer Pumpe (18) bestehen, die Wasser aus einem Reservoir (2) unterhalb der Sprühnebel-Abscheidekammer über den Leitkanal in die Ringrinne pumpt.

FIG. 1

FIG.2

FIG. 3